# EUROPEAN PATENT APPLICATION

(11) **EP 2 202 353 A2**
(43) Date of publication of application: **30.06.2010**
(21) Application number: 09252909.8
(22) Date of filing: 24.12.2009
(51) Int. Cl.: D21B 1/32, D21D 1/30

(54) **Method of beating used paper, method of processing used paper, device for beating used paper and apparatus for processing used paper**

(30) Priority: 27.12.2008 JP 2008335489
(71) Applicant: Seed Co., Ltd., Osaka-shi Osaka (JP)
(72) Inventor: Tamai, Shigeru, Osaka-shi, Osaka (JP); Koyama, Yuji, Osaka-shi, Osaka (JP)
(74) Representative: Mounteney, Simon James

(57) **Abstract**

The invention presents a beating technology of used paper processing apparatus of furniture size, capable of preventing leak or disclosure of confidential information, personal information or any other information securely and capable of holding a high confidentiality, that can be installed not only in a large office, but also in a small shop or general household. In the beating process of the beating unit (3) in the used paper processing apparatus of furniture size, by using at least one grinder (30) having beating action surfaces (31a, 32a) disposed oppositely across a tiny beating gap (G), and a pair of beating disks (31, 32) rotating relatively, the beating gap (G) of the beating action surfaces (31a, 32a) is controlled or adjusted to be narrower gradually from the beginning till the end of the beating process. As a result, a smooth and efficient beating operation is realized from the beginning till the end of the beating process.

## Description

### BACKGROUND OF THE INVENTION

### Field of the Invention

The present invention relates to a beating method of used paper processing apparatus, a used paper processing method, a beating device of used paper processing apparatus, and a used paper processing apparatus, and more particularly to a used paper processing technology for processing so-called used paper, that is, used and unnecessary documents such as confidential papers in government offices or private companies, or personal documents in general household, effectively while preventing leak or disclosure of confidential information, personal information, and various other information written or printed in such documents.

### Description of the Related Art

In daily activities at government offices or private companies, customer information, personal information, project information, in-company information, plans and schemes, apparatus design documents, and various confidential information are printed in documents and managed and used, and in daily life at general household, letters and postcards carrying the name and address of individuals, electric bill and gas meter bill and other documents carrying the personal information are used, and these documents are used and not required, they are discarded as used paper.

In the modern life of electronic society in the background of rapid progress in information technology, it is essential to prevent leak or disclosure of customer information written in used paper confidential information printed in design paper, name and address and other personal information, and various other information written or printed in such documents, and the preventive measures and technology are developed competitively.

Among them, the shredder is used widely in office or at home, as a useful tool for preventing leak of important corporate information or personal information. That is, the shredder is provided with a function of shredding used documents into small pieces (see, for example, Japanese Patent Unexamined Publication No. 6362752), and the characters and drawings printed in the used paper are dissected into small pieces so as not to be visible or legible, and the confidential information and personal information contained in the characters and drawings can be effectively prevented from being leaked or disclosed.

However, the recent dramatic technical progress has made it possible to restore the original documents from the shredded pieces of paper (shredded chips), and reproduce and collect confidential information from the shredded documents. As a result, the reliability of the shredder once believed to be the protector of confidential information or personal information is no longer trusted completely.

In this relation, the present applicant developed and presented a used paper processing apparatus as disclosed, for example, in Japanese Patent Unexamined Publication Laid-Open No. 2007-308837.

This used paper processing apparatus has realized a used paper recycling technology of a large size equal to a used paper recycling plant, in a small size to be installed in a small shop, or in a room of general household, and the apparatus is contained in an apparatus case of furniture size, and includes a pulp making unit for making used paper pulp by fragmenting and beating used paper, a paper making unit for manufacturing recycled paper from the used paper pulp manufactured in the pulp making unit, and a control unit for driving and controlling by interlocking the pulp making unit and the paper making unit, and the pulp making unit consists of a fragmenting unit for agitating, grinding and fragmenting the used paper, and a beating unit for beating the used paper fragmented in the fragmenting unit.

The used paper is agitated, fragmented and beating by the fragmenting unit of the pulp making unit, and made into pulp, and is further beaten and pulverized by the beating unit, and a desired used paper pulp is prepared, which is made into recycled paper later by the paper making unit. In this case, in the pulp making process, the used paper is decomposed into a fiber level, and the written characters and drawings are completely decomposed and destroyed, and cannot be restored, and leak or disclosure of confidential information and personal information composed of characters and drawings can be securely prevented.

### BREIF SUMMARY OF THE INVENTION

It is hence a primary object of the present invention to present a novel beating technology of used paper processing apparatus solving the problems of the prior art.

It is other object of the present invention to present a beating technology of used paper processing apparatus of furniture size to be installed not only in a large office, but also in a small shop or a room in general household, capable of preventing leak or disclosure of confidential information, personal information or various data securely, and keeping a high confidentiality, by further improving and specializing the mechanical technology of the pulp making section in the used paper processing apparatus.

To achieve the objects, the beating method of used paper processing apparatus of the present invention is a beating method of used paper processing apparatus including a fragmenting process of agitating, grinding and fragmenting the used paper, and a beating process of beating the used paper fragmented in the fragmenting process, and in beating process, beating action surfaces are disposed oppositely across a tiny beating gap, and the beating gap of the beating action surfaces is controlled to be narrower gradually from the beginning to the end of the beating process by using at least one beating means having a pair of beating disks rotating relatively.

A preferred embodiment may be composed as follows.
(1) A used paper pulp circulation route is formed by disposing at least one beating means, the used paper pulp beaten by the beating means is circulated in the used paper circulation route in the beating process, and the beating gap of the beating action surfaces is gradually narrowed from the beginning till the end of the beating process.
(2) In the beating process, the beating gap of the beating means is controlled to be narrowed in gradual steps from the beginning till the end of the beating process.
(3) In the beating process, the beating gap of the beating means is controlled to be narrowed gradually and continuously from the beginning till the end of the beating process.
(4) The plurality of beating means are formed in a series of used paper pulp route, and the beating gap of the plurality of beating means is fixed and set to be narrower gradually from the upstream side to the downstream side.
(5) The opening area of the beating gap in the plurality of beating means is set so that the flow rate of the used paper pulp may be substantially uniform.
(6) The beating means is formed as a grinder having a pair of beating disks rotating relatively, beating action surfaces of the beating disks are disposed oppositely across a tiny beating gap each other, and the beating action surfaces have annular flat surfaces formed on the outer circumference of the beating disks, and the annular flat surfaces form the beating gap.
(7) The beating action surfaces are grinding surfaces formed by coupling multiple abrasive grains by means of a binding material.

The used paper processing method of the present invention includes a fragmenting process of agitating, grinding and fragmenting the used paper, and a beating process of beating the used paper fragmented in the fragmenting process, and the beating process is realized by the beating method as mentioned above.

A preferred embodiment may be composed as follows.
(1) The fragmenting process is characterized by using agitating means disposed rotatably in a fragmenting tank, the used paper is charged into the fragmenting tank, and water in a quantity corresponding to the charged amount of the used paper is supplied to the fragmenting tank, and the used paper and water are agitated by the agitating means, thereby the used paper is fragmented and beaten.
(2) Shredder means is provided at a used paper inlet of the fragmenting tank, and the used paper charged from the used paper inlet is preliminarily shredded by the shredder means, and is agitated by the agitating means.

The beating device of the used paper processing apparatus of the present invention is a beating device of used paper processing apparatus, being a beating device for composing the beating unit in the used paper processing apparatus which comprises a fragmenting unit for agitating, grinding and fragmenting the used paper, and a beating unit for beating the used paper fragmented in the fragmenting unit, these fragmenting unit and beating unit are installed in an apparatus case of furniture size, the beating device comprising at least one beating means, in which the beating means is formed as a grinder having a pair of beating disks rotated and driven relatively, beating action surfaces of the beating disks are disposed oppositely across a tiny beating gap each other, and the beating gap of the beating action surfaces of the beating means is set to be narrower gradually from the beating means at the beginning of the beating process toward the beating means at the end.

A preferred embodiment may be composed as follows.
(1) The beating means includes a beating tank having a supply port for supplying the used paper pulp from the upstream side and a discharge port for discharging the beaten used paper pulp to the downstream side, a pair of beating disks disposed relatively and rotatably in the beating tank, and a rotation drive source for rotating and moving these beating disks relatively, in which the used paper pulp supplied from the supply port is pressurized and beaten by the beating action surfaces while being passed through the beating gap between the beating disks.
(2) Gap adjusting means is provided for moving the pair of beating disks relatively in the rotation axial direction, and adjusting the beating gap of these beating disks.
(3) One of the pair of beating disks is a fixed beating disk provided fixedly in the rotating direction, and the other is a rotatable beating disk provided ratatably, and an inlet communicating with the supply port of the beating tank is formed in a central position of the beating action surface of the fixed beating disk, and two annular flat surfaces formed on the outer peripheral edges of the beating action surfaces of the pair of beating disks forms an exit communicating with a discharge port of the beating tank and having the beating gap.
(4) The beating action surfaces are grinding surfaces formed by coupling multiple abrasive grains by means of a binding material.
(5) A used paper pulp circulation route is formed by disposing at least one beating means, and circulating means for circulating the used paper in the used paper pulp circulation route is provided, in which the used paper pulp fragmented and processed in the fragmenting unit is circulated in the used paper pulp circulation route by means of the circulating means, and is beaten in the beating process by the beating means, and the beating gap of the beating action surfaces of the beating means is set to be narrower gradually from the beating means at the beginning of the beating process toward the beating means at the end.
(6) At least one beating means is provided in the used paper pulp circulation route, and the beating gap of the beating means is controlled to be narrowed in gradual steps from the beginning till the end of the beating process.
(7) At least one beating means is provided in the used paper pulp circulation route, and the beating gap of the beating means is controlled to be narrowed gradually and continuously from the beginning till the end of the beating process
(8) Beating control means for controlling the beating means is provided, and this beating control means is configured so as to execute the beating process while circulating the used paper pulp after the beating process by the beating means in the used paper pulp circulation route by the circulating means, and the drive source of the beating means is driven and controlled so that the beating gap of the beating action surfaces may be narrower gradually from the beginning till the end of the beating process.
(9) In the used paper pulp circulation route, a fragmenting tank of the fragmenting unit is included, and when executing the beating method, the agitating means of the fragmenting unit is driven and controlled.
(10) In the used paper pulp circulation route, a bypass route including a reserve tank for storing the used paper pulp beaten by the beating means is connected by means of changeover means, and when executing the beating method, the changeover means is driven and controlled so as to change over and use selectively the fragmenting tank of the fragmenting unit and the reserve tank of the bypass route.
(11) A used paper pulp route is formed by consecutively linking the plurality of beating means, and the beating gap of beating action surfaces of the beating means is fixed and set so as to be narrower gradually from the beginning beating means till the ending beating means in the beating process.
(12) Beating control means for controlling the beating means is provided, and this beating control means drives and controls the drive source of the plurality of beating means disposed consecutively in the used paper pulp route, thereby executing the beating process.
(13) The opening areas of the beating gaps in the plurality of beating means are set to be substantially same in the flow rate of used paper pulp.

Further, the used paper processing apparatus of the present invention is a used paper processing apparatus installed in an apparatus case of furniture size for fragmenting and beating the used paper to make into pulp, including a fragmenting unit for agitating, grinding and fragmenting the used paper, and a beating unit for beating the used paper fragmented by the fragmenting unit, in which the beating unit is composed of the beating device described above.

A preferred embodiment may be composed as follows.
(1) The fragmenting unit includes a fragmenting tank having a used paper feed port for feeding and supplying the used paper, and a discharge port for discharging the fragmented used paper pulp to the downstream side, and this fragmenting tank has rotatable agitating means, and the used paper supplied from the used paper feed port is mixed with water and agitated by the agitating means, and fragmented and beaten.
(2) Shredder means is provided at the used paper feed port of the fragmenting tank, and the used paper supplied into the used paper feed port is preliminarily shredded by the shredder means, and is agitated by the agitating means.
(3) The fragmenting unit has water feed means for supplying water into the fragmenting tank.
(4) Dewatering means is provided for dewatering the used paper pulp beaten by the beating unit.
   (i) According to the present invention, in the beating process for beating the used paper fragmented in the preceding fragmenting process, the beating action surfaces are disposed oppositely across a tiny beating gap, and by using at least one beating means having a pair of beating disks rotating relatively, the beating gap of the beating action surfaces is gradually narrowed from the beginning till the end of the beating process, and therefore smooth and efficient beating is realized from the beginning till the end of the beating process.
      That is, for example, in an early stage of beating, the beating gap of the beating action surfaces is set to a clearance dimension corresponding to the size of the fibers of used paper pulp fragmented in the preceding fragmenting process, and hence the used paper pulp is smoothly promoted to pass through the beating gap, and a high beating rate is achieved, and in a later stage of beating, the clearance dimension is adjusted to a size capable of beating to fibers of used paper pulp of desired finishing dimension, so that the used paper pulp of desired fiber size will be obtained finally. As a result, a smooth and efficient beating is realized from the beginning till the end of the beating process.
      Accordingly, the used paper is decomposed into fiber level (to be pulp), and the written characters and drawing are completely removed and eliminated, and cannot be restored, and leak of disclosure of confidential information or personal information written in characters and drawings can be prevented securely, and a high confidentiality is assured.
   (ii) Moreover, for such smooth and efficient beating, large power is not needed, and the used paper processing apparatus of furniture size can be installed in a small shop, small office or household room, and leak or disclosure of any information written in various documents can be securely prevented, from the individual level of private letters in general household, to the public level of confidential documents in government offices and private enterprises, and the running cost is also low.
   (iii) The used paper pulp circulation route is formed by disposing at least one beating means, and the used paper pulp beaten by the beating means is circulated in the used paper pulp circulation route in the beating process, so that the used paper pulp may be beaten efficiently according to the purpose, and an appropriate beating effect will be obtained.
      In particular, because of the used paper processing apparatus of furniture size, the used paper pulp beating process route of an infinite length basically not limited in length can be formed in a limited process space, and the compact used paper processing apparatus of furniture size is capable of assuring a wide beating process space nearly equal to the beating process in a large apparatus.
   (iv) The used paper processing apparatus employing such beating technique is compact in the apparatus structure, and can be installed not only in a large office, but also in a small shop or general household, and from this viewpoint, too, leak or disclosure of confidential information, personal information or other information can be prevented securely.

The other objects and features of the present invention will be understood and appreciated by reading the following detailed description along with the accompanying drawings, and novel facts indicated in the claims thereof.

### BRIEF DESCRIPTION OF THE DRAWINGS

Fig.1 is a front sectional view showing an overall outline configuration of a used paper processing apparatus in preferred embodiment 1 of the present invention.
Fig. 2 is a magnified front view of a partial section of principal configuration of a beating unit of the used paper processing apparatus.
Fig. 3 is a magnified front view of an internal configuration of a grinder as a principal component of the beating unit.
Fig. 4 is a perspective exploded view of principal parts of the grinder of the beating unit.
Fig. 5 is a circuit diagram of a configuration of used paper pulp circulation route of the beating unit.
Fig. 6 is a block diagram of control configuration of the used paper processing apparatus.
Fig. 7 is a perspective view of outline configuration of the used paper processing apparatus.
Fig. 8 is a circuit diagram of a configuration of used paper pulp circulation route of a beating unit in a used paper processing apparatus in preferred embodiment 3 of the present invention.
Fig. 9 is a circuit diagram of a configuration of used paper pulp circulation route of a beating unit in a used paper processing apparatus in preferred embodiment 4 of the present invention.
Fig. 10 is a front sectional view of an overall outline configuration of a used paper processing apparatus in preferred embodiment 5 of the present invention.

### DETAILED DESCRIPTION OF THE PREFERRED EMBODIMENTS

Preferred embodiments of the present invention are specifically described below while referring to the accompanying drawings. Throughout the drawings, same reference numerals refer to same components or elements.

### Preferred embodiment 1

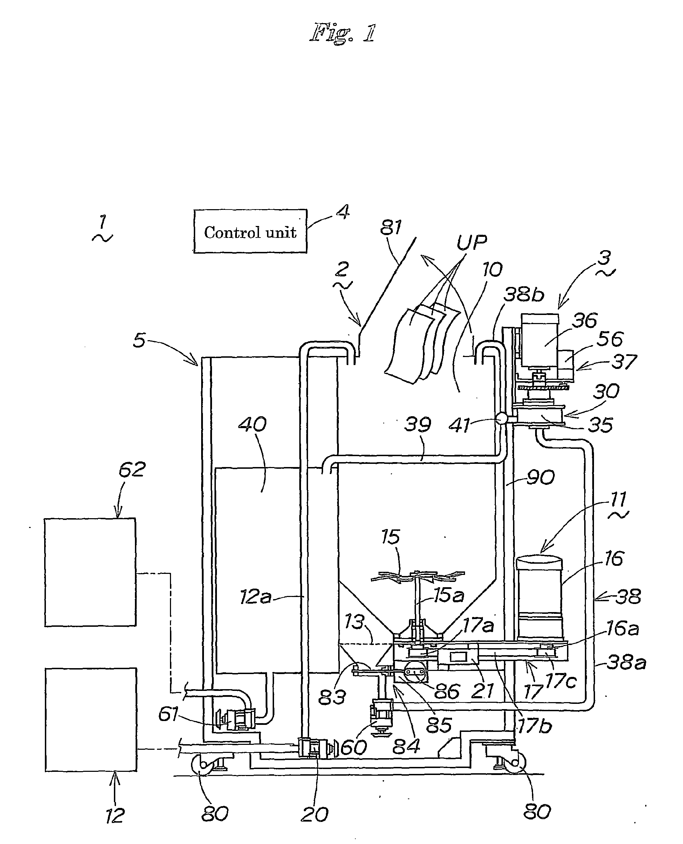

The used paper processing apparatus of the present invention is shown in Fig. 1 to Fig. 7, in which a used paper processing apparatus 1 is installed specifically at the site of origin of used paper, and is an apparatus for fragmenting and beating the used paper UP and processing into pulp, and such used paper UP includes confidential documents occurring in government offices and private companies, and private letters in general household, and other used and unnecessary documents.

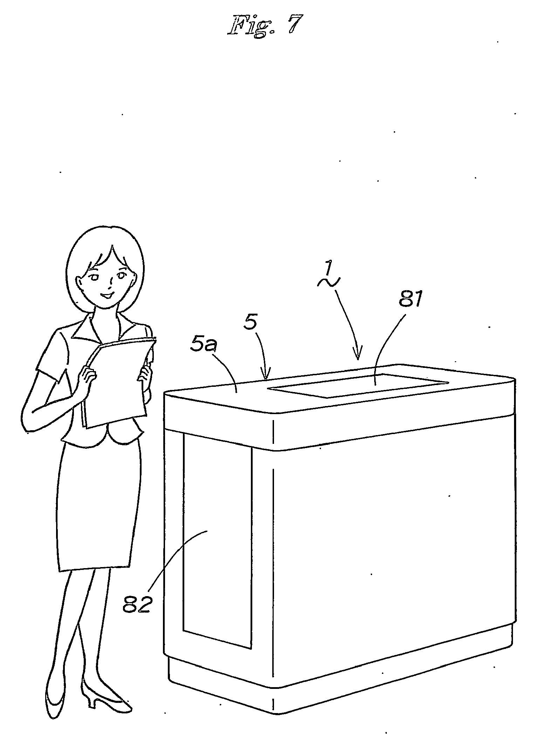

The used paper processing apparatus 1 has a furniture size as shown in Fig. 7, that is, size and shape similar to office equipment, such as document rack, locker, desk, copier, or personal computer, and is mainly composed of a fragmenting unit 2, a beating unit (beating device) 3, and a device control unit 4 as shown in Fig. 1, and these device components 2 to 4 are contained in an apparatus case 5 in a compact design, and the drive source of the fragmenting unit 2 and the beating unit 3 is a motor-driven power source driven by a general household alternating-current power source.

The apparatus case 5 has a furniture size as mentioned above, and the specific dimensions and shape are designed properly depending on the purpose and application. The apparatus case 5 in the illustrated preferred embodiment is a cubic box having dimensions and shape like a copier used in an office, and the outer circumference is covered with a decorative case cover 5a. The bottom of the apparatus case 5 is provided with casters 80, 80, ... as moving means so as to be moved freely on the floor. In the ceiling of the apparatus case 5, a closable inlet 81 is provided for supplying used paper UP, and a closable pulp recovery port 82 is provide at the side for taking out and collecting the used paper pulp UPP.

The fragmenting unit 2 is a process unit for agitating, grinding, and fragmenting the used paper UP, and is mainly composed of a fragmenting tank 10, an agitating device (agitating means) 11, and a water feed device (water feeding means) 12.

The fragmenting tank 10 is provided with the inlet (used paper inlet) 81 for feeding and supplying used paper UP in the ceiling wall as shown in Fig. 1, and a discharge port 83 for discharging the fragmented used paper pulp UPP to the downstream side is provided in the bottom wall. The inner volume of the fragmenting tank 10 is determined depending on the number of sheets of used paper UP to be agitated and processed in batch. In the shown preferred embodiment, about 98 liters of water is added, and the fragmenting tank 10 has a capacity of agitating and processing about 500 sheets (about 2000 g) of used paper UP of A4 format PPC (plain paper copier) (in batch process). At this time, the concentration of used paper pulp UPP to be fragmented is about 2%.

The inlet 81 can be opened to outside of the case cover 5a of the apparatus case 5. The discharge port 83 can be opened and closed by an opening valve 84, and communicates with a used paper pulp circulation route 38 described below. At the position of the discharge port 83, a debris filter 13 is provided for removing paper clips, staples, wires and others used for binding used paper UP, UP, ... which may become troubles in the subsequent beating process.

The opening valve 84 is specifically opened and closed by the crank motion of a crank mechanism 86 by a drive motor 85. The drive motor 85 is specifically an electric motor, and the drive motor 85 is electrically connected to the device control unit 4.

The agitating device 11 is provided inside of the fragmenting tank 10, and is provided with an agitating impeller 15 and a drive motor 16.

The agitating impeller 15 has its rotation shaft 15a rotatably supported upright in the central position of the bottom of the fragmenting tank 10, and is provided so as to be free to rotate horizontally, and the lower end of the rotation shaft 15a is driven and coupled to a rotation shaft 16a of the drive motor 16 by way of transmission means 17 composed of a transmission pulley 17a, a transmission belt 17b, and a transmission pulley 17c.

By rotation and driving of the drive motor 16, the agitating impeller 15 is continuously or intermittently rotated and driven normally and reversely. The drive motor 16 is specifically an electric motor, and the drive motor 16 is electrically connected to the device control unit 4.

As the agitating impeller 15 is rotated normally and reversely, if the used paper UP is agitated directly in its original A4 format, by the water jet action of normal rotation and reverse rotation of the agitating impeller 15, the used paper is dispersed effectively, and entangling on the agitating impeller 15 can be effectively prevented.

The blade shape of the agitating impeller 15 is designed so as to be different in the agitating force (dispersion effect) in normal rotation and reverse rotation, and hence the used paper UP, UP, ... may be fragmented and beaten uniformly.

The operating conditions of the agitating impeller 15, such as changeover timing of normal rotation and reverse rotation, and the agitation time are determined on the basis of the preliminary experiment data so as to obtain desired fragmenting and beating effects of used paper UP, UP, ....

The water feed device 12 is to supply water into the agitating device 11, and is provided outside of the apparatus case 5 as shown in Fig. 1 in the illustrated preferred embodiment.

The water feed device 12 is not specifically shown in its structure, but includes a water feed source such as water feed tank, and a water feed pump 20 for supplying the water of the water feed source as the power, and by this water feed pump 20, the water from the water feed source is supplied into the fragmenting tank 10 through the water feed piping 12a.

In this relation, a weight sensor 21 is provided in the bottom of the fragmenting tank 10, and the amount of used paper UP, UP, ... and water to be processed in batch in the fragmenting tank 10 is measured and controlled, and the weight sensor 21 is electrically connected to the device control unit 4.

The weight sensor 21 of the illustrated preferred embodiment is a load cell, and is designed to detect and measure the total weight of the weight of the fragmenting tank 10, the amount of used paper UP, UP, ... and water supplied into the fragmenting tank 10.

In a specific control configuration of the fragmenting unit 2, first the worker opens the inlet 81, and used paper UP, UP, ... are charged into the fragmenting tank 10, and the weight detected and measured by the weight sensor 21, and when reaching a specified amount (number of sheets), the worker is informed by sound and/or display. According to the display, the worker closes the inlet 81, and the water feed device 12 is driven, and the water feed pump 20 supplies the water in the water supply source into the fragmenting tank 10 by the amount corresponding to the weight (number of sheets) of charged used paper UP, UP, ....

In the illustrated preferred embodiment, as mentioned above, when the used paper UP of A4 format of about 500 sheets (about 2000 g) is charged into the fragmenting tank 10, the worker is informed at this moment by sound and/or display, and when the inlet 81 is closed, about 98 liters of water is supplied into the water feed device 12.

In the agitating device 11, the used paper UP, UP,... charged into the fragmenting tank 10 from the opening or the inlet 81 of the apparatus case 5 are, by normal and reverse rotation of the agitating impeller 15 by the drive motor 16, agitated and mixed for a specified time (about 10 minutes to 20 minutes in the illustrated preferred embodiment) in the water supplied from the water feed device 12, and thereby the used paper UP, UP, ... are fragmented and beaten, and transformed into used paper pulp UPP.

The discharge port 83 of the fragmenting tank 10 is closed by the opening valve 84 during normal operation of the fragmenting unit 2, and flow of used paper UP or used paper pulp UPP from the fragmenting tank 10 into the used paper pulp circulation route 38 is blocked, and during operation of the beating unit 3 mentioned below, the discharge port 83 is opened by the opening valve 84, and flow of used paper UP from the fragmenting tank 10 into the used paper pulp circulation route 38 is permitted along with the circulatory flow.

The beating unit 3 is a process unit for beating the used paper UP fragmented in the fragmenting unit 2, and more specifically the used paper UP fragmented in the fragmenting unit 2 is pressurized and beaten, and inks forming characters and drawings on the used paper UP (including printing inks forming characters and drawings on the used paper UP various printing techniques, or inks forming characters and drawings on the used paper UP by pencil, ballpoint pen, fountain pen, other writing tools) are ground and pulverized (until micro-fibers).

The beating unit 3 has at least one beating means (one unit in the illustrated preferred embodiment) 30.

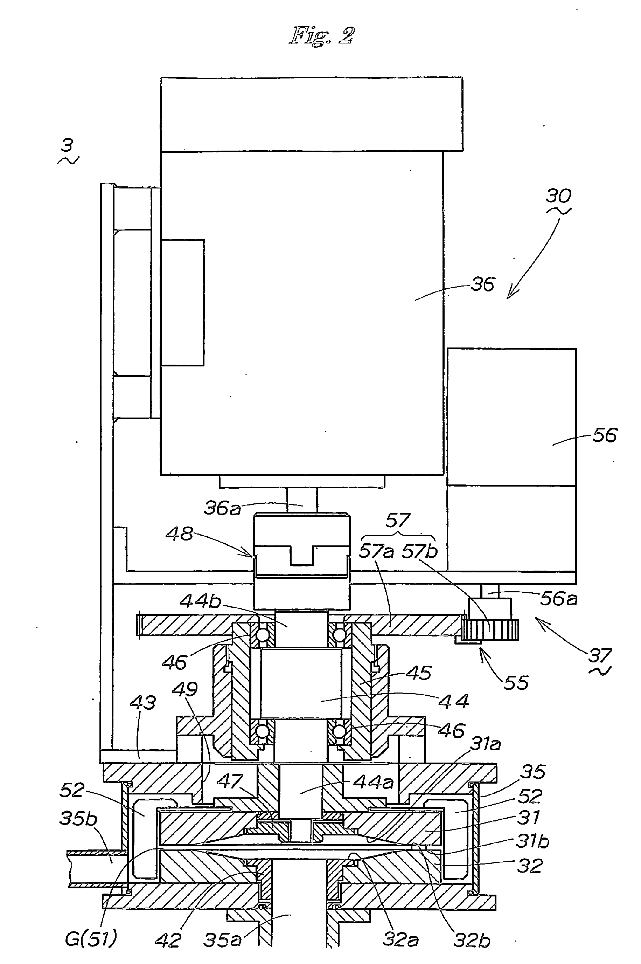

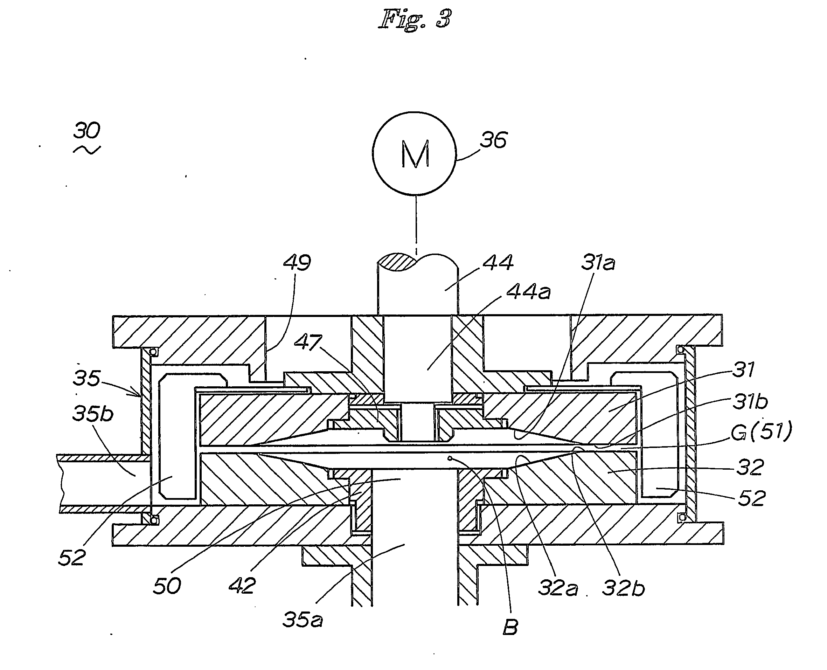

The beating means 30 is a grinder mainly having a pair of beating disks 31, 32 rotated and driven relatively as principal components as shown in Fig. 2 and Fig. 3, and the pair of beating disks 31, 32 have beating action surfaces 31a, 32a disposed oppositely and concentrically a cross a tiny beating gap G.

The beating gap G of the beating action surfaces 31a, 32a of the grinder (beating means) 30 is set to be narrower gradually from the beginning of the grinder 30 till the end of the grinder 30 in the beating process as described below.

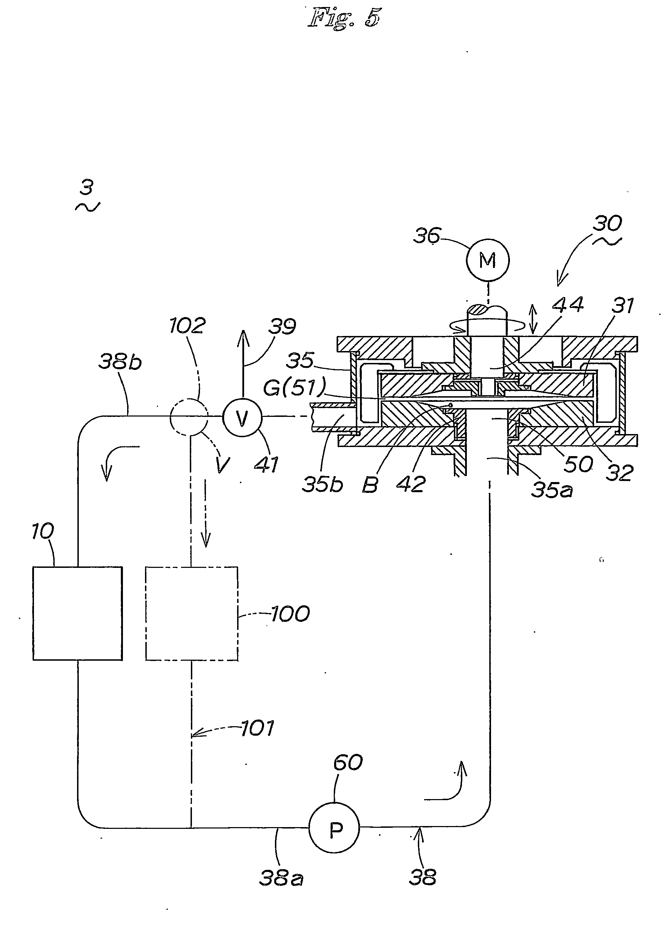

In the beating unit 3 of the present preferred embodiment, as shown in Fig. 5, the used paper pulp circulation route 38 having one grinder 30 is formed, and the used paper pulp UPP is beaten and processed as being circulated for a specified time by way of the grinder 30 in the circulation system.

By execution of the beating process by this used paper pulp circulation route 38, in spite of the small and limited process space in the apparatus case 5 of furniture size, the used paper pulp circulation route of an infinite length basically not limited in length can be formed, and it is capable of assuring a wide beating process space nearly equal to the beating process in a large apparatus, and an appropriate beating effect is obtained depending on the purpose.

Besides, since one grinder 30 beats and processes throughout the whole process of the beating process, this one grinder 30 plays the function of a plurality of grinders, from the grinder at the beginning till the grinder at the end of the beating process. Specifically, the beating gap G of the beating action surfaces 31a, 32a of the grinder 30 is controlled and adjusted to be narrower gradually from the beginning till the end of the beating process.

The grinder 30 in the illustrated preferred embodiment is provided on an apparatus machine body 90 for composing the apparatus case 5, adjacently to the fragmenting tank 10 of the fragmenting unit 2, and includes, as shown in Fig. 2, a beating tank 35 communicating with the fragmenting tank 10 of the fragmenting unit 2, a pair of beating disks 31, 32 provided in the beating tank 35 to be rotatable relatively, a rotation drive source 36 for relatively rotating and driving the pair of beating disks 31, 32, and gap adjusting means 37 for adjusting the beating gap G of the pair of beating disks 31, 32.

The beating tank 35 formed in a closed cylindrical shape so as contain the pair of beating disks 31, 32, and has a feed port 35a for supplying the used paper pulp UPP from the upstream side, and a discharge port 35b for discharging the beaten used paper pulp UPP to the downstream side.

More specifically, the feed port 35a is opened in the center of the bottom of the beating tank 35 toward the vertical direction, and the discharge port 35b is opened at the cylindrical side of the beating tank 35 toward the horizontal direction. The feed port 35a and the discharge port 35b communicate with the fragmenting tank 10 of the fragmenting unit 2 by way of circulation piping 38a, 38b respectively, and the discharge port 35b further communicates with a used paper pulp collection tank 40 by way of a discharge piping 39.

Reference numeral 41 is a direction changeover valve, and by the changeover action of this direction changeover valve 41, the used paper pulp UPP discharged from the discharge port 35b is selectively refluxed into the fragmenting tank 10, or collected in the used paper pulp collection tank 40. The direction changeover valve 41 is specifically an electromagnetic opening valve, and is electrically connected to the device control unit 4.

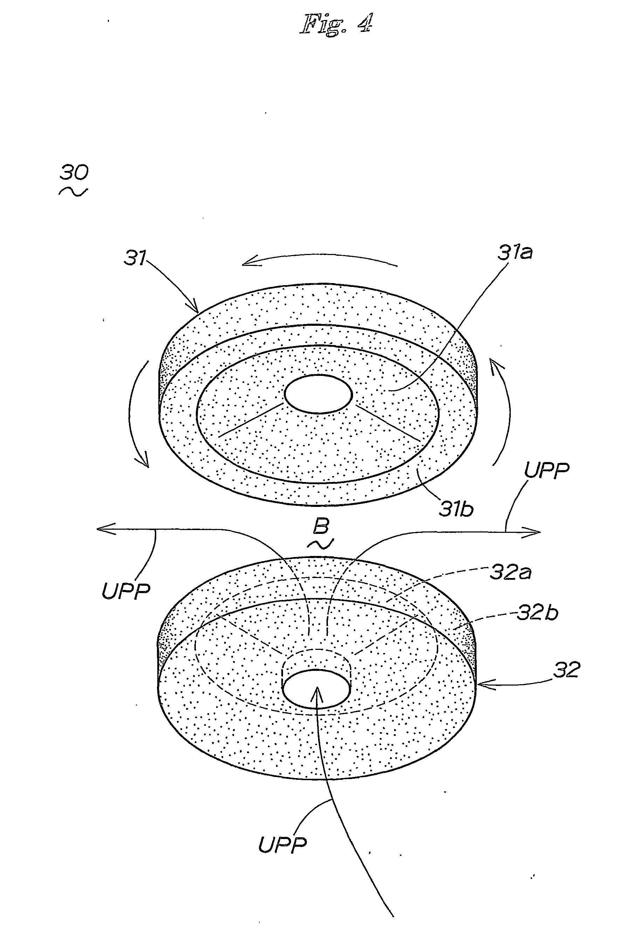

The pair of beating disks 31, 32 consist of one fixed beating disk fixed in the rotating direction, and other rotatable beating disk, and in the illustrated preferred embodiment, as shown in Fig. 4, the upper beating disk 31 is the rotatable side, and the lower beating disk 32 is the fixed side.

The lower fixed side beating disk 32 is fixed to the inner side of the bottom of the beating tank 35 by means of a screw-type hollow fixing member 42, and the upper rotary side beating disk 31 is disposed oppositely to this fixed side beating disk 32, concentrically and rotatably relatively across a tiny beating gap G.

This rotary side beating disk 32 is driven and coupled by a drive motor 36 by way of a rotation spindle 44 supported on an apparatus base 43 mounted and fixed on an apparatus machine body 90 rotatably and movably in the axial direction.

The rotation spindle 44 is supported on an elevating member 45 of the gap adjusting means 37 described later, rotatably by bearings 46, 46, and the rotary side beating disk 32 is formed at its leading end portion 44a concentrically and integrally by means of a mounting nut member 47, and its base end portion 44b driven and coupled to a rotation shaft 36a of the drive motor 36 by means of a shaft coupling 48, integrally in the rotating direction and movably in the axial direction relatively.

The drive motor 36 is a rotation drive source, which rotates and moves the pair of beating disks 31, 32 relatively, and it is specifically an electric motor, and this drive motor 36 is electrically connected to the device control unit 4.

The leading end portion 44a of the rotation spindle 44 is opposite to the inside of the beating tank 35 by way of an opening 49 in the center of the ceiling of the beating tank 35, and the interval of the opening 49 and the rotation spindle 44 is not sealed, and the inside and the outside of the beating tank 35 communicate with each other, and the seal structure is simplified. The sealing performance of this location is assured by controlling and adjusting the volume of the used paper pulp UPP so that the discharge amount from the discharge port 35b may be larger than the supply amount from the feed port 35a.

The opposite sides 31a, 32a of the both beating disks 31, 32 having the tiny beating gap G cooperate to form the beating action surfaces. These opposite beating action surfaces 31a, 32a formed as grinding surfaces having multiple abrasive grains bonded by a bonding material, and the both beating action surfaces 31a, 32a are formed in a taper shape, as shown in Fig. 3 and Fig. 4, so that the diameter dimensions may be larger continuously in the mutually opposite directions, and annular flat surfaces 31b, 32b are formed so that the outermost peripheral edges may be parallel to each other, and these annular flat surfaces 31b, 32b are forming the beating gap G.

In other words, in the pair of beating disks 31, 32, in the central position of the beating action surface 32a of the fixed side beating disk 32, an inlet 50 communicating concentrically with the feed port 35a of the beating tank is formed, and two annular flat surfaces 31b, 32b formed on the outer peripheral edge of the beating action surfaces 31a, 32b of the pair of beating disks 31, 32 communicate with the discharge port 35b of the beating tank 35, and form an outlet 51 having the beating gap G.

On the outer circumference of the rotary side beating disk 31, a plurality of blades 52, 52, ... are provided at specified intervals in the circumferential direction, and these blades 52, 52, ... have pump actions for extruding the used paper pulp UPP discharged from the discharge port 51 toward the discharge port 35b of the beating tank 35 by the centrifugal force by rotation of the rotary side beating disk 31.

By the drive motor 36, the rotary side beating disk 31 is rotated and driven oppositely to the fixed side beating disk 32, and the used paper pulp UPP supplied from the fragmenting tank 10 of the fragmenting unit 2 into the beating space B by way of the feed port 35a of the beating tank 35 and the inlet flows from the inlet 50 into the beating space B, and passes through the beating space B, and receives the pressurizing and the beating action by the relatively rotating beating action surfaces 31a, 32a, and the ink particles forming the characters and drawings on the used paper UP are pulverized and destroyed, and the used paper pulp UPP is discharged from the discharge port 35 of the beating tank 35 by way of the outlet 51.

When being discharged from the outlet 51, the used paper pulp UPP further receives the pressurizing and the beating action at the position of the outlet 51 having the beating gap G, and is pulverized to specified micron size (to become micro fibers) by the beating gap G.

In this regard, in the present preferred embodiment, as mentioned above, one grinder 30 is installed in the used paper pulp circulation route 38 in the circulatory beating process (see Fig. 5), and one grinder 30 functions as a plurality of grinders, from the grinder at the beginning the grinder at the end of the beating process, and the beating gap G of the grinder 30 is controlled and adjusted to be narrower gradually from the beginning till the end of the beating process by way of the gap adjusting means 37.

The gap adjusting means 37 is specifically shown in Fig. 2, in which the pair of beating disks 31, 32 are relatively moved in the direction of axis of rotation, and the beating gap G of these beating disks 31, 32 is controlled and adjusted, and it is mainly composed of moving means 55 for moving the rotary side beating disk 31 in the direction of the axis of rotation, that is, in the axial direction of the rotation spindle 44, and a drive source 56 for driving this moving means 55.

The moving means 55 has the elevating member 45 mentioned above and a rotary mechanism 57 for rotating and moving this elevating member 45. The elevating member 45 is nearly cylindrical, and is supported, as shown in Fig. 2, on an apparatus base 43 to as to be movable back and forth concentrically and vertically on the pair of beating disks 31, 32, and the rotation spindle 44 is rotatably supported in the inside by way of the bearings 46, 46. At the upper end of the elevating member 45, a gear 57a of a rotary mechanism 57 is provided integrally, and a pinion 57b to be engaged with the gear 57a is mounted and fixed on a rotation shaft 56a of the drive motor 56 as the drive source.

The drive motor 56 is specifically an electrical motor, and this drive motor 56 is electrically connected to the device control unit 4.

By rotation of this drive motor 56, the elevating member 45 ascends and descends together with the rotation spindle 44 on the apparatus base 43 by way of the rotary mechanism 57, and the rotary side beating disk 31 integral with the rotation spindle 44 moves in the vertical direction to the fixed side beating disk 32, that is, in the direction of the axis of rotation, and thereby the beating gap G of the both beating disks 31, 32 is controlled and adjusted.

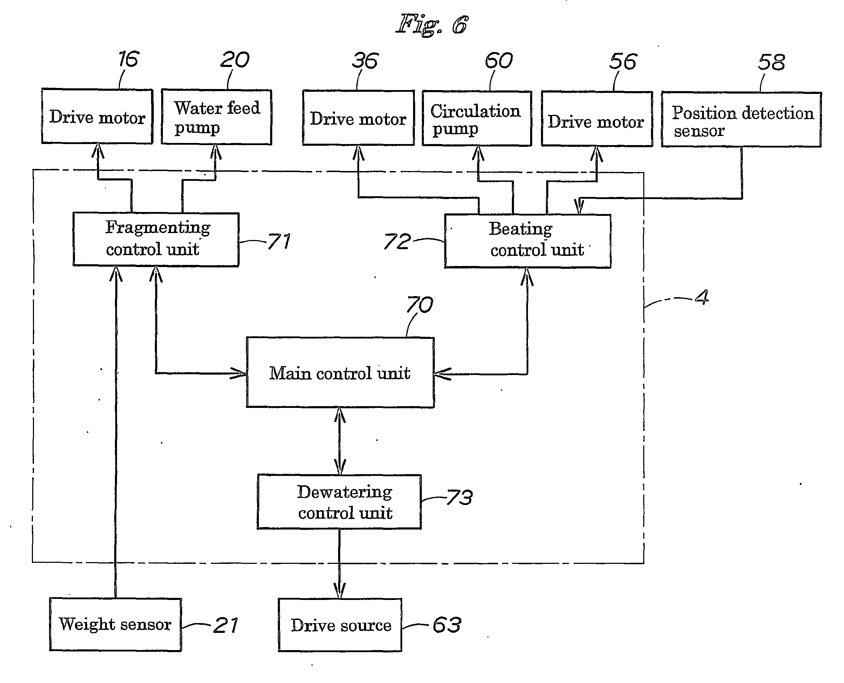

For this purpose, a position detection sensor 58 (see Fig. 6) is provided for detecting the elevating position of the rotary side beating disk 31, and depending on the detection result of the position detection sensor 58, the drive motor 56 is driven and controlled. The position detection sensor 58 may be realized by an encoder for detecting the number of revolutions of the drive motor 56, a proximity sensor for detecting the rotating position of the gear 57a or the pinion 57b of the rotary mechanism 57, or a proximity sensor for detecting directly the elevating position of the rotary side beating disk 31, and in the shown illustrated preferred embodiment, a proximity sensor for detecting the rotating position of the gear 57a of the rotary mechanism 57 is used. This position detection sensor 58 is electrically connected to the device control unit 4.

The beating gap G of the beating disks 31, 32 is controlled and adjusted by the gap adjusting means 47 as shown in Fig. 5, in mutual cooperation with the circulation pump 60 as circulating means in the circulatory beating process in the used paper pulp circulation route 38.

That is, as shown in Fig. 5, the used paper pulp circulation route 38 is composed of circulation piping 38a and 38b, being formed in an annular loop by way of the fragmenting tank 10 of the fragmenting unit, the circulation pump 60, and one grinder 30, and at an intermediate point of the circulation piping 38b, a discharge piping 39 is branched and connected to communicate with the used paper pulp collecting tank 40 by way of the discharge piping 39 through the direction changeover valve 41.

The used paper pulp UPP fragmented and processed by the fragmenting unit 2 is circulated in the used paper pulp circulation route 38 by means of the circulation pump 60, and the beating process is executed by the grinder 30, and the beating gap G of the beating action surfaces 31a, 32a of the grinder 30 is adjusted at this time by the gap adjusting means 37 so as to be narrower gradually from the beginning till the end of the beating process.

By the gap adjusting means 37, the beating gap G of the grinder 30 is controlled and adjusted in the following methods:
(i) the beating gap G of the grinder 30 is controlled to be narrower gradually from the beginning till the end of the beating process, (ii) the beating gap G of the grinder 30 is controlled to be narrower continuously from the beginning till the end of the beating process, and others, and the former method is employed in the illustrated preferred embodiment.

The timing and magnitude of gradual narrowing of the beating gap G of the grinder 30 may be determined appropriately so that the beaten used paper pulp UPP may not be clogged in the beating gap G according to the conditions obtained by tests in consideration of the relation of the concentration of the used paper pulp UPP and the circulation flow rate and time of the used paper pulp UPP by the circulation pump 60.

In the illustrated preferred embodiment, the conditions are set as follows.
(a) Concentration of used paper pulp UPP being beaten: about 2%
(b) Size of beating gap G of the grinder: 4 stages as the following timing.

First stage: the beating gap G is 1 mm, being circulated for 5 minutes.

Second stage: the beating gap G is 0.4 mm, being circulated for 25 minutes.

Third stage: the beating gap G is 0.12 mm, being circulated for 45 minutes.

Fourth stage: the beating gap G is 0.05 mm, and the beaten pulp is discharged and collected in the used paper pulp collecting tank 40.

The fragmenting tank 10 of the fragmenting unit 2 is included in the used paper pulp circulation route 38, and therefore in the beating process, the agitating device 11 of the fragmenting unit 2 is driven and controlled, and the fragmenting unit 2 is driven simultaneously with the beating unit 3.

In other words, in the circulatory beating process, while the used paper pulp UPP flows out from the fragmenting tank 10 into the used paper pulp circulation route 38, the used paper pulp UPP beaten by the grinder 30 flows into the fragmenting tank 10, and therefore in the fragmenting tank 10, components of used paper pulp UPP different in the degree of beating coexist, and by the agitating action of the agitating device 11, the degree of beating of the used paper pulp UPP in the fragmenting tank 10 becomes more uniform, so that the fragmenting process is promoted.

The used paper pulp collecting tank 40 is a location for collecting the used paper pulp UPP beating and pulverized to desired size by the beating unit 3, and the used paper pulp UPP collected in this location is dewatered and processed by a dewatering device 62 outside of the apparatus by means of a discharge pump 61, and is discarded or used as material for recycled paper, or directly taken out of the apparatus and discarded as refuse.

The dewatering device 62 has a conventional known basic structure, and more preferably a mechanical dewatering device of centrifugal dewatering system or pressurized dewatering system may be employed. A drive source 63 of this dewatering device 62 is electrically connected to the device control unit 4.

The device control unit 4 is designed to control the operations of the drive units such as fragmenting unit 2, beating unit 3, and dewatering device 62 automatically by mutual cooperation, and is specifically composed of a microcomputer including CPU, ROM, RAM and I/O ports.

The device control unit 4 stores programs for executing the fragmenting process of the fragmenting unit 2 and the beating process of the beating unit 3 (and the dewatering process of the dewatering device 62) continuously, and is composed of, as shown in Fig. 6, a main control unit 70, a fragmenting control unit 71 for controlling the drive sources 16, 20 of the fragmenting unit 2 (11, 12), a beating control unit 72 for controlling the drive sources 36, 60, 56 of the beating unit 3 (30, 37), and a dewatering control unit 73 for controlling the drive source 63 of the dewatering device 62.

The main control unit 70 stores various information necessary for driving of the drive sources of the drive units 2, 3, 62, for example, the driving time and rotating speed of the agitating device 11 in the fragmenting unit 2, the water feed timing and water feed volume of the water feeding device 12, the driving time and circulation amount of the circulation pump 60 in the beating unit 3, the driving time and rotating speed of the grinder 30, the adjusting timing and adjusting amount of beating gap G of the gap adjusting means 37, the driving time of the drive source of the dewatering device 62, and others are appropriately and selectively entered by the keyboard and the like of the operation board as control data, and according to such control data, the weight sensor 21 receives the detection result of the position detection sensor 58, and controls the control units 71, 72, 73 appropriately.

The used paper processing apparatus 1 having such configuration is started when the power source is turned on, and the individual driving units are automatically controlled in mutual cooperation by the device control unit 4, and the following processes are executed. Consequently, the used paper UP, UP, ... charged into the used paper processing apparatus 1 are fragmented and beaten by the fragmenting unit 2 and the beating unit 3, and leak or disclosure of the confidential information or personal information written in the used paper UP can be effective prevented.
i) The worker puts a specified number of sheet (about 500 sheets or about 2000 g in the illustrated preferred embodiment) of used paper UP of A4 format PPC into the fragmenting tank 10, and closes the inlet 81 after the notice by sound and/or display, and about 98 liters of water is charged into the water feeding device 12.
ii) The agitating device 11 is driven, and the used paper UP, UP, ... charged in the fragmenting tank 10 are agitated in normal and reverse rotation of the agitating impeller 15 driven by the drive motor 16, and mixed for a specified time (about 10 minutes to 20 minutes in the illustrated preferred embodiment) in the water supplied from the water feeding device 12, and the used paper UP, UP, ... are fragmented and beaten to be used paper pulp UPP.
iii) By driving of the agitating device 11 for a specified time, the used paper UP, UP, ... are transformed into used paper pulp UPP, and the discharge port 83 of the fragmenting tank 10 is opened by the opening valve 84, and the fragmenting tank 10 communicates with the used paper pulp circulation route 38, and the circulation pump 60, the grinder 30 and the gap adjusting means 37 of the beating unit 3 are driven.
   The agitating device 11 of the fragmenting unit 2 is driven, and the used paper pulp UPP left over in the fragmenting tank 10 and the used paper pulp UPP refluxed in the fragmenting tank 10 are agitated, and the degree of beating of the used paper pulp UPP in the fragmenting tank 10 is made uniform, and the beating process is promoted.
iv) In Fig. 5, the used paper pulp UPP fragmented by the fragmenting unit 2 is circulated in the used paper pulp circulation route 38 by the circulation pump 60, and is beaten by the grinder 30 (beating process). At this time, the beating gap G of the beating action surfaces 31a, 32a of the grinder 30 is adjusted to be narrower gradually from the beginning till the end of the beating process by means of gap adjusting means 37, and the beating process continues.
v) In the illustrated preferred embodiment, as mentioned above, at the first stage, the beating gap G is adjusted to 1 mm, and the used paper pulp UPP is circulated for 5 minutes, and pressurized and beaten by the grinder 30.
vi) At the second stage, the beating gap G is adjusted to 0.4 mm, and the used paper pulp UPP is circulated for 25 minutes, and pressurized and beaten by the grinder 30.
vii) At the third stage, the beating gap G is adjusted to 0.12 mm, and the used paper pulp UPP is circulated for 45 minutes, and pressurized and beaten by the grinder 30.
viii) At the final fourth stage, the beating gap G is adjusted to 0.05 mm, and the used paper pulp UPP is pressurized and beaten by the grinder 30, and is pulverized to a specified micron size (micro fibers are formed).
ix) The direction changeover valve 41 of the used paper pulp circulation route 38 is changed over, and the used paper pulp UPP discharged from the grinder 30 is discharged and collected in the used paper pulp collecting tank 40 by way of the discharge piping 39.
x) The used paper pulp UPP collected in the used paper pulp collecting tank 40 is dewatered a dewatering device 62 outside of the apparatus by a discharge pump 61, and is discarded or recovered as material for recycled paper, or is directly taken out of the apparatus, and discarded together with other refuse.

In the used paper processing apparatus 1 having such configuration, in the beating process by the beating unit 3, the beating action surfaces 31a, 32a are disposed oppositely across a tiny beating gap G, and by using at least one grinder (beating means) 30 having a pair of beating disks 31, 32 rotating relatively, the beating gap G of the beating action surfaces 31a, 32a is adjusted to be narrower gradually from the beginning till the end of the beating process, so that a smooth and efficient beating operation is realized from the beginning till the end of the beating process.

That is, in an initial stage of the beating process, the beating gap G of 31a, 32a is set to a clearance corresponding to the fiber size of used paper pulp UPP fragmented in the preceding fragmenting process (fragmenting unit 2) (that is, 1 mm in the illustrated preferred embodiment), and a high beating rate is maintained while promoting invasion and passing of used paper pulp UPP smoothly into the beating gap G, and in a final stage of the beating process, the gap size is adjusted to the clearance for pulverizing to the fiber size of used paper pulp UPP of desired finish size (0.05 mm in the illustrated preferred embodiment), so that the used paper pulp UPP of desired fiber size can be obtained finally. Therefore, from the beginning till the end of the beating process, a smooth and efficient beating is realized.

As a result, the used paper UP is decomposed into fiber level (to be pulp), and the characters and drawings written in the paper are completely decomposed and lost, and cannot be restored, and leak or disclosure of the confidential information or personal information composed of characters and drawings written in the used paper UP can be effective prevented, and a high confidentiality is maintained.

Moreover, since particularly large power is not needed for such smooth and efficient beating process, it is ideal for the used paper processing apparatus 1 of furniture size that can be installed in a small shop or in a room of general household, and it is effective to prevent leak or disclosure of the confidential information or personal information written in documents, from personal information written in private letters to confidential information of government offices and general enterprises printed in various documents, and the running cost is also suppressed low.

Besides, the used paper pulp circulation route 38 is formed by using at least one grinder 30, and the used paper pulp UPP after the beating process by the grinder 30 is circulated in the used paper pulp circulation route 38, and is processed, and the used paper pulp UPP is beaten efficiently according to the purpose, and an adequate beating efficiency is obtained.

In particular, in a limited process space of the used paper processing apparatus of furniture size, the used paper pulp beating process route of infinite length not limited in length, in principle, can be formed, and the used paper processing apparatus of furniture size may have a wide beating process space nearly equal to that of the beating process in a large-scale apparatus.

The used paper processing apparatus 1 of such beating technology is compact in the apparatus structure, and can be installed anywhere, from a large office to a small office or a private home, and from this point of view, too, leak or disclosure of confidential information and personal information can be securely prevented.

### Preferred embodiment 2

This preferred embodiment is indicated by double dot chain line in Fig. 5, and it is similar to preferred embodiment 1, except that the structure of the beating unit (beating device) 3 is modified.

That is, in the beating unit 3 of this preferred embodiment, the used paper pulp circulation route 38 includes a bypass route 101 having a reserve tank 100 for storing the used paper pulp UPP beaten by the grinder 30, being connected by way of a direction changeover valve 102 as changeover means. The direction changeover valve 102 is specifically an electromagnetic valve, and is electrically connected to a beating control unit 72 of the device control unit 4.

The beating control unit 72 is designed to drive and control the direction changeover valve 102 so that the fragmenting tank 10 of the fragmenting unit 2 and the reserve tank 100 of the bypass route 101 may be changed over and used selectively, when executing the beating method in preferred embodiment 1.

More specifically, in the beating process in preferred embodiment 1, the used paper pulp UPP flowing out into the used paper pulp circulation route 38 from the fragmenting tank 10 by the circulation pump 60 is beaten by the grinder 30, and is not refluxed into the fragmenting tank 10, but flows into the reserve tank 100 of the bypass route 101 from the direction changeover valve 102, and this state is maintained until all of used paper pulp UPP in the fragmenting tank 10 flows out.
When all of used paper pulp UPP in the fragmenting tank 10 flows out, the direction changeover valve 102 is changed over, and this time the used paper pulp UPP flowing out in the used paper pulp circulation route 38 from the reserve tank 100 is beaten by the grinder 30, and is not refluxed into the reserve tank 100, but flows into the fragmenting tank 10 of the used paper pulp circulation route 38 from the direction changeover valve 102, and this state is maintained until all of used paper pulp UPP in the reserve tank 100 flows out. Thereafter, changeover of the direction changeover valve 102 is repeated.

Thus, two storage tanks 10, 100 are used alternately, and in the circulatory beating process of this preferred embodiment, it is possible to avoid the circumstance in which the used paper pulp UPP flows out from the fragmenting tank 10 (or reserve tank 100) into the used paper pulp circulation route 38 while the used paper pulp UPP beaten by the grinder 30 flows into the fragmenting tank 10 (or reserve tank 100), and thereby preventing mixture of used paper pulp UPP different in the degree of beating within the fragmenting tank 10 (or reserve tank 100), and not only it is not necessary to drive the agitating device 11 as in preferred embodiment 1, but also the beating process efficiency is enhanced as compared with the beating process in preferred embodiment 1.

The other structure and action are same as in preferred embodiment 1.

### Preferred embodiment 3

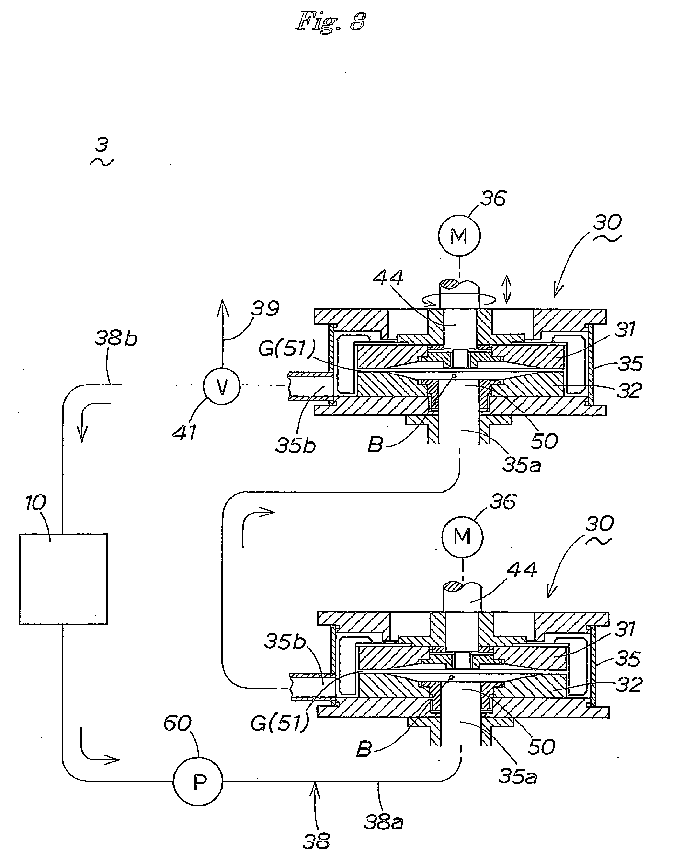

This preferred embodiment is shown in Fig. 8, and it is similar to preferred embodiment 1, except that the structure of the beating unit (beating device) 3 is modified.

That is, in the beating unit 3 of the preferred embodiment, a plurality of (two in the preferred embodiment) grinders 30, 30 are disposed in series in the used paper pulp circulation route 38.

The beating gaps G, G of these grinders 30, 30 are controlled to be narrower gradually at same dimension from the beginning till the end of the beating process.

In this case, the beating gaps G, G of the grinders 30. 30 by the gap adjusting means 37 is controlled and adjusted, same as in preferred embodiment 1, in the following methods: (i) the beating gaps G, G of the grinders 30, 30 are controlled to be narrower gradually at same dimension from the beginning till the end of the beating process, (ii) the beating gaps G, G of the grinders 30. 30 are controlled to be narrower continuously at same dimension from the beginning till the end of the beating process, and others, and the former method is employed in the illustrated preferred embodiment.

The timing and magnitude of gradual narrowing of the beating gaps G, G of the grinders 30, 30 may be determined appropriately, same as in preferred embodiment 1, so that the beaten used paper pulp UPP may not be clogged in the beating gap G according to the conditions obtained by tests in consideration of the relation of the concentration of the used paper pulp UPP, and the circulation flow rate and time of the used paper pulp UPP by the circulation pump 60.

In the illustrated preferred embodiment, the conditions are set as follows.
(a) Concentration of used paper pulp UPP being beaten: about 2%
(b) Size of beating gap G of the grinder 30: 4 stages as the following timing.

First stage: the beating gap G is 1 mm, being circulated for 2.5 minutes.

Second stage: the beating gap G is 0.4 mm, being circulated for 12.5 minutes.

Third stage: the beating gap G is 0.12 mm, being circulated for 22.5 minutes.

Fourth stage: the beating gap G is 0.05 mm, and the beaten pulp is discharged and collected in the used paper pulp collecting tank 40.

Evidently, in the beating process of this preferred embodiment, by disposing two grinders 30, 30 in series, the beating efficiency is 2 times higher, and the required time for beating process is 1/2 as compared with preferred embodiment 1.

The other structure and action are same as in preferred embodiment 1.

### Preferred embodiment 4

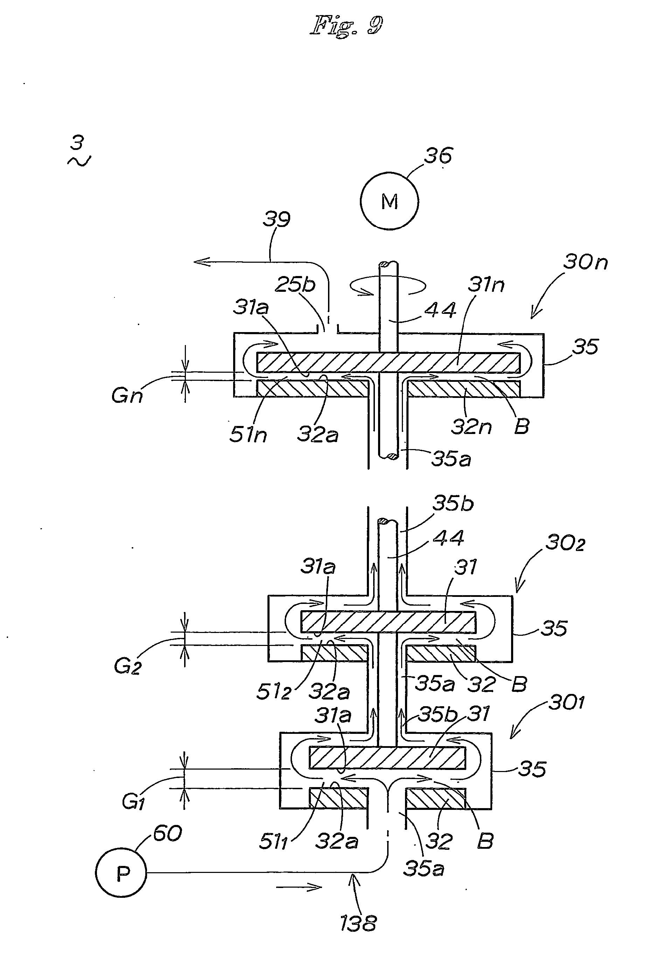

This preferred embodiment is shown in Fig. 9, and it is similar to preferred embodiment 1, except that the structure of the beating unit (beating device) 3 is modified.

That is, in the beating unit 3 of the preferred embodiment, a plurality of (n units in the illustrated preferred embodiment) grinders 30₁, 30₂, ... 30ₙ are disposed in series to compose a used paper pulp circulation route 138, and beating gaps G₁, G₂, ... , Gₙ of beating action surfaces 31a, 32a, 31a, 32a, ..., 31a, 32a of these grinders 30₁, 30₂, ... 30ₙ are fixed and set to be narrower gradually from the grinder 30₁ at the beginning of the beating process to the grinder 30ₙ at the end.

For example, in the grinder 30₁ at the beginning of the beating process, the beating gap G₁ of the beating action surfaces 31a, 32a is set to a clearance corresponding to the fiber size of used paper pulp UPP fragmented in the preceding fragmenting process (fragmenting unit 2) (that is, 1 mm in the illustrated preferred embodiment), and a high beating rate is maintained while promoting invasion and passing of used paper pulp UPP smoothly into the beating gap G₁, and in a final stage of the beating process of the grinder 30ₙ, the gap size is adjusted to the clearance for pulverizing to the fiber size of used paper pulp UPP of desired finish size (0.05 mm in the illustrated preferred embodiment), so that the used paper pulp UPP of desired fiber size can be obtained finally.

In this configuration, so as to be equal in the grinding efficiency in the beating gaps G₁, G₂, ..., Gₙ of the grinders 30₁, 30₂, ..., 30ₙ, the opening area of the beating gaps G₁, G₂, ..., Gₙ, that is, the opening area of the outlets 51₁, 51₂, ..., 51ₙ is determined so as to be substantially equal in the flow rate of the used paper pulp UPP. Specifically, the outside diameter size of the pair of beating disks 31, 32 for composing the grinders 30₁, 30₂, ..., 30ₙ is determined so as to be larger gradually from the upstream side to the downstream side.

In the used paper processing apparatus 1 having such configuration, the used paper pulp UPP finished in the fragmenting process in the fragmenting unit 2 flows into the used paper pulp circulation route 138 from the discharge port 83 of the fragmenting tank 10, and is sequentially pressurized and beaten by the plurality of grinders 30₁, 30₂, ..., 30ₙ (n units in the illustrated preferred embodiment) disposed in series, and is finally pulverized to a desired micron size defined by the beating gap Gₙ of the grinder 30ₙ (to be micro fiber), and is discharged and collected in the used paper collecting tank 40 by way of the discharging piping 39.

The other structure and action are same as in preferred embodiment 1.

### Preferred embodiment 5

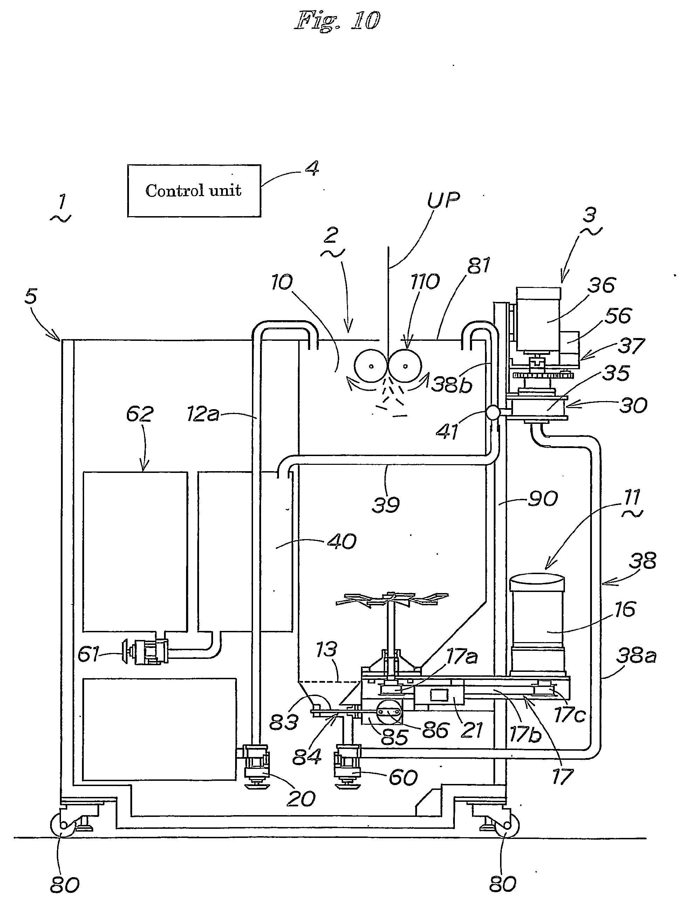

This preferred embodiment is shown in Fig. 10, and it is similar to preferred embodiment 1, except that the structure of the fragmenting unit 2 and others is modified.

That is, in the used paper processing apparatus 1 of the preferred embodiment, a shredder unit (shredder means) 110 is provided in the used paper inlet 81 of the fragmenting tank 10 of the fragmenting unit 2, and the used paper UP charged into the inlet 81 is preliminarily shredded by the shredder unit 110, and the efficiency of fragmenting and beating by the agitating device 11 is enhanced. A specific structure of the shredder unit 110 is similar to a conventional shredder, and has a basic structure of cutting the used paper UP into small pieces (double cut type, cross cut type, etc.).

This preferred embodiment is similar to preferred embodiment 1, except that the water feeding device (water feeding means) 12 and the dewatering device (dewatering means) 62 provided outside of the apparatus case 5 of the used paper processing apparatus 1 are built in the apparatus case 5 as components of the fragmenting unit 2 and the beating unit 3.

The other structure and action are same as in preferred embodiment 1.

Having described preferred embodiments of the present invention with reference to the accompanying drawings, it is to be understood that the present invention is not limited to those precise preferred embodiments, and that various changes and modifications may be effected therein by one skilled in the art without departing from the scope or spirit of the present invention as defined in the appended claims.

## Claims

1. A beating method of used paper processing apparatus, being a beating method applied in a used paper processing apparatus comprising a fragmenting process of agitating, grinding and fragmenting used paper, and a beating process of beating the used paper fragmented in the fragmenting process,
wherein, in the beating process, by using at least one beating means provided with a pair of beating disks rotating relatively, with beating action surfaces disposed oppositely across a tiny beating gap, the beating gap of the beating action surfaces is gradually narrowed from the beginning till the end of the beating process.

2. The beating method of used paper processing apparatus of claim 1,
wherein a used paper pulp circulation route is formed by disposing at least one beating means, and
the used paper pulp beaten by the beating means is circulated in the used paper pulp circulation route and beaten in the beating process, and the beating gap of the beating action surfaces is gradually narrowed from the beginning till the end of the beating process.

3. The beating method of used paper processing apparatus of claim 2,
wherein, in the beating process, the beating gap of the beating means is controlled to be narrowed in gradual steps from the beginning till the end of the beating process.

4. The beating method of used paper processing apparatus of claim 2,
wherein, in the beating process, the beating gap of the beating means is controlled to be narrowed gradually and continuously from the beginning till the end of the beating process.

5. The beating method of used paper processing apparatus of claim 1,
wherein a used paper pulp route is formed by disposing a plurality of the beating means in series, and
the beating gap of the plurality of beating means is fixed and set to be narrower gradually from the upstream side to the downstream side.

6. The beating method of used paper processing apparatus of claim 5,
wherein the opening area of the beating gap in the plurality of beating means is set so that the flow rate of the used paper pulp may be substantially uniform.

7. The beating method of used paper processing apparatus of claim 1,
wherein the beating means is formed as a grinder having a pair of beating disks rotating relatively, beating action surfaces of the disks are disposed oppositely across a tiny beating gap each other, and
the beating action surfaces have annular flat surfaces formed on the outer circumference of the beating disks, and the annular flat surfaces form the beating gap.

8. The beating method of used paper processing apparatus of claim 7,
wherein the beating action surfaces are grinding surfaces formed by coupling multiple abrasive grains by means of a binding material.

9. A used paper processing method of used paper processing apparatus comprising a fragmenting process of agitating, grinding and fragmenting the used paper, and a beating process of beating the used paper fragmented in the fragmenting process,
wherein, in the beating process, by using at least one beating means provided with a pair of beating disks rotating relatively, with beating action surfaces disposed oppositely across a tiny beating gap, the beating gap of the beating action surfaces is gradually narrowed from the beginning till the end of the beating process.

10. The used paper processing method of used paper processing apparatus of claim 9,
wherein the fragmenting process is **characterized by** using agitating means disposed rotatably in a fragmenting tank, the used paper is charged into the fragmenting tank, and water in a quantity corresponding to the charged amount of the used paper is supplied to the fragmenting tank, and the used paper and water are agitated by the agitating means, thereby the used paper is fragmented and beaten.

11. The used paper processing method of used paper processing apparatus of claim 10,
wherein shredder means is provided at a used paper inlet of the fragmenting tank, and the used paper charged from the used paper inlet is preliminarily shredded by the shredder means, and is agitated by the agitating means.

12. A beating device of used paper processing apparatus, being a beating device for composing the beating unit in the used paper processing apparatus which comprises a fragmenting unit for agitating, grinding and fragmenting the used paper, and a beating unit for beating the used paper fragmented in the fragmenting unit, these fragmenting unit and beating unit are installed in an apparatus case of furniture size, the beating device comprising:
at least one beating means,
wherein the beating means is formed as a grinder having a pair of beating disks rotated and driven relatively, beating action surfaces of the beating disks are disposed oppositely across a tiny beating gap each other,
wherein the beating gap of the beating action surfaces of the beating means is set to be narrower gradually from the beating means at the beginning of the beating process toward the beating means at the end.

13. The beating device of used paper processing apparatus of claim 12,
wherein the beating means includes a beating tank having a supply port for supplying the used paper pulp from the upstream side and a discharge port for discharging the beaten used paper pulp to the downstream side, a pair of beating disks disposed relatively and rotatably in the beating tank, and a rotation drive source for rotating and moving these beating disks relatively, and
the used paper pulp supplied from the supply port is pressurized and beaten by the beating action surfaces while being passed through the beating gap between the beating disks.

14. The beating device of used paper processing apparatus of claim 13,
wherein gap adjusting means is provided for moving the pair of beating disks relatively in the rotation axial direction, and adjusting the beating gap of these beating disks.

15. The beating device of used paper processing apparatus of claim 12,
wherein one of the pair of beating disks is a fixed beating disk provided fixedly in the rotating direction, and the other is a rotatable beating disk provided ratatably, and an inlet communicating with the supply port of the beating tank is formed in a central position of the beating action surface of the fixed beating disk, and two annular flat surfaces formed on the outer peripheral edges of the beating action surfaces of the pair of beating disks form an exit communicating with a discharge port of the beating tank and having the beating gap.

16. The beating device of used paper processing apparatus of claim 15,
wherein the beating action surfaces are grinding surfaces formed by coupling multiple abrasive grains by means of a binding material.

17. The beating device of used paper processing apparatus of claim 12,
wherein a used paper pulp circulation route is formed by disposing at least one beating means, and circulating means for circulating the used paper in the used paper pulp circulation route is provided,
the used paper pulp fragmented and processed in the fragmenting unit is circulated in the used paper pulp circulation route by means of the circulating means, and is beaten in the beating process by the beating means, and
the beating gap of the beating action surfaces of the beating means is set to be narrower gradually from the beating means at the beginning of the beating process toward the beating means at the end.

18. The beating device of used paper processing apparatus of claim 17,
wherein at least one beating means is provided in the used paper pulp circulation route, and
the beating gap of the beating means is controlled to be narrowed at same size in gradual steps from the beginning till the end of the beating process.

19. The beating device of used paper processing apparatus of claim 17,
wherein at least one beating means is provided in the used paper pulp circulation route, and
the beating gap of the beating means is controlled to be narrowed gradually and continuously at same size from the beginning till the end of the beating process

20. The beating device of used paper processing apparatus of claim 17, further comprising:
beating control means for controlling the beating means,
wherein the beating control means is configured so as to execute the beating process while circulating the used paper pulp after the beating process by the beating means in the used paper pulp circulation route by the circulating means, and the drive source of the beating means is driven and controlled so that the beating gap of the beating action surfaces may be narrower gradually from the beginning till the end of the beating process.

21. The beating device of used paper processing apparatus of claim 20,
wherein, in the used paper pulp circulation route, a fragmenting tank of the fragmenting unit is included, and when executing the beating method, the agitating means of the fragmenting unit is driven and controlled.

22. The beating device of used paper processing apparatus of claim 21,
wherein, in the used paper pulp circulation route, a bypass route including a reserve tank for storing the used paper pulp beaten by the beating means is connected by means of changeover means, and when executing the beating method, the changeover means is driven and controlled so as to change over and use selectively the fragmenting tank of the fragmenting unit and the reserve tank of the bypass route.

23. The beating device of used paper processing apparatus of claim 12,
wherein a used paper pulp route is formed by consecutively linking the plurality of beating means, and the beating gap of beating action surfaces of the beating means are fixed and set so as to be narrower gradually from the beginning beating means till the ending beating means in the beating process.

24. The beating device of used paper processing apparatus of claim 23, further comprising:
beating control means for controlling the beating means,
wherein the beating control means drives and controls the drive source of the plurality of beating means disposed consecutively in the used paper pulp route, thereby executing the beating process.

25. The beating device of used paper processing apparatus of claim 23,
wherein the opening areas of the beating gaps in the plurality of beating means are set to be substantially same in the flow rate of used paper pulp.

26. A used paper processing apparatus installed in an apparatus case of furniture size for fragmenting and beating the used paper to make into pulp, comprising:
a fragmenting unit for agitating, grinding and fragmenting the used paper, and a beating unit for beating the used paper fragmented by the fragmenting unit,
wherein the beating unit has at least one beating means, and the beating means is formed as a grinder having a pair of beating disks rotated and driven relatively, beating action surfaces of the beating disks are disposed oppositely across a tiny beating gap each other, and the beating gap of the beating action surfaces of the beating means is set to be narrower gradually from the beating means at the beginning of the beating process toward the beating means at the end.

27. The used paper processing apparatus of claim 26,
wherein the fragmenting unit includes a fragmenting tank having a used paper feed port for feeding and supplying the used paper, and a discharge port for discharging the fragmented used paper pulp to the downstream side, and agitating means provided rotatably in this fragmenting tank, and
the used paper supplied from the used paper feed port is mixed with water and agitated by the agitating means, and fragmented and beaten.

28. The used paper processing apparatus of claim 27,
wherein shredder means is provided at the used paper feed port of the fragmenting tank, and the used paper supplied into the used paper feed port is preliminarily shredded by the shredder means, and is agitated by the agitating means.

29. The used paper processing apparatus of claim 27,
wherein the fragmenting unit has water feed means for supplying water into the fragmenting tank.

30. The used paper processing apparatus of claim 26, further comprising:
dewatering means for dewatering the used paper pulp beaten to become pulp by the beating unit.
